# EUROPEAN PATENT APPLICATION

(11) **EP 0 882 982 A1**
(43) Date of publication of application: **09.12.1998**
(21) Application number: 97201699.2
(22) Date of filing: 04.06.1997
(51) Int. Cl.: G01N 30/38, F04B 43/04

(54) **Method for separating a fluid substance and device therefor**

(71) Applicant: VRIJE UNIVERSITEIT BRUSSEL, 1050 Brussel (BE)
(72) Inventor: Baron, Gino, B-3080 Tervuren (BE); Desmet, Gert, B-1982 Elewijt (BE)
(74) Representative: Eveleens Maarse, Pieter

(57) **Abstract**

The present invention relates to a method for separating a fluid substance into its components, in particular a chromatographic separating method, by driving a mobile phase in, out and through a finite separating path, said path being defined by at least two wall elements, and in said path a retentive phase is arranged and through which a mobile phase and an injected sample to be separated into its components flow, wherein the driving in, out and through the separating path of the mobile phase is mainly caused by shear forces, which forces originate from a relative movement of at least one wall element compared to the other wall element.

The invention also relates to a separating device for separating a fluid substance into its components, in particular a chromatographic separation device, said device comprises a finite separating path in which a retentive phase is arranged and through which a mobile phase and an injected sample to be separated into its components flow, and means for transporting the mobile phase in, through and out the separation path, wherein the means for transporting the mobile phase are formed by at least one wall element, said element is slidably arranged parallel to separation path.

## Description

The present invention relates to a new separation method and a device therefor, especially to a device and method for open-tubular chromatography, in accordance with the preamble of claim 1. With the word finite is meant in the application that every component is allowed to have a specific retention time.

Chromatographic separating methods aim at separating the different components (solute species) which make up a given sample. For this purpose, a sample is injected in a solvent or carrier gas stream (often referred to as the unretained fluid or as the mobile phase) which carries the sample solutes along a separating path (often referred to as column) in which a retentive layer (often referred to as the stationary phase) is arranged. As the different sample solute species have a different affinity for the retentive layer, one species will spent more time in the retentive layer than another. As a consequence, all different species will move through the separating path with a different velocity. Arranging a detector device at an end of the separating path, the different sample solute species will pass the detection point in a clearly separated mode, allowing to qualify and quantify the different species which were originally present in the sample. The response signal which is obtained when the ensemble of solutes of a given species passes the detector is generally referred to as a peak.

Presently, the two most popular chromatographic techniques are either pressure-driven or electrically-driven (Bruin et al., 1990). In pressure-driven chromatography, the fluid phase motion is generated by applying a pressure difference across the separating channel. The two most popular versions of pressure-driven chromatography are packed-column liquid chromatography (HPLC) and open-tubular gas chromatography (capillary GC). These two chromatographic techniques suffer from the fact that the pressure drop may not exceed a given value. These values typically lie around 200 to 400 bar for liquid chromatography (LC), and somewhere between 5 to 100 bar (depending upon the application) for GC. Both in packed-columns and in open-tubular columns, this pressure-drop limitation restricts the column length (and hence the achievable number of theoretical plates) and the applicable mobile phase velocity. It also puts a down-limit to the effective column diameter d (open-tubular columns) or particle diameter dₚ (packed columns) which can be used when a given separation quality has to be achieved (Katz et al., 1985). The latter restriction puts a down-limit on the analysis time, because the analysis time can be considered to be proportional to d² or dₚ². (Guiochon, 1981). In electrically driven separations, a similar down-limit for the analysis time exists. In this case, the down-limit originates from the existence of a maximal allowable voltage drop (Dittmann et al., 1995).

In GC, the pressure drop limitation problem has been largely circumvented by passing from packed to open-tubular columns with circular cross-section (capillary GC). However, the large molecular diffusivity of the gases, combined with the existence of a maximal allowable pressure drop, generally limits the achievable number of theoretical plates to a few hundred thousands (Giddings, 1965). In LC, the pressure drop problem can theoretically also be reduced by switching from packed to open-tubular columns with a circular cross-section (Guiochon, 1979). The corresponding optimal channel diameter-values are however so small (order 1 µm) that detection becomes the limiting problem, due to the required degree of miniaturization of the detector (Xi and Yeung, 1990). Typical problems are the lack of optical path length, or the fact that the sample solute flow rates are too small. The detection problem is the main reason for the fact that the commercial success of open-tubular LC lags far behind the (inherently slower) packed column LC (HPLC). As a possibility to solve the detection problem in open-tubular LC, the use of flat rectangular channels with a large aspect ratio (i.e., channel width much larger than channel thickness) has been proposed (Golay, 1981, Giddings, 1983). In theory, the small column thickness should provide fast separation kinetics whereas the much larger column width should provide a sufficient optical path length and a sufficient volumetric flow rate of sample solutes. However such columns have never yielded the desired efficiencies, due to the following reasons:
in pressure-driven flows, the flow profile induced by the presence of side walls (no matter how small compared to the channel width) creates a peak broadening which is approximately 8 times larger (Doshi et al., 1978) than which is obtained in the unrealizable case in which no side walls are present;
in pressure driven flows, the mobile phase velocity (unretained fluid) depends upon the channel width. This means that when the channel is for example one percent thinner near one side wall than near the other side wall, the solute near one end moves accordingly faster than the solute near the other side wall. This causes a peak broadening which is already unacceptable when only 12,000 plates are desired (Poppe, 1992);
flat channels are generally fragile (Albin et al., 1993), easily deformable (they have to withstand pressures of up to 400 bar in LC) and the required coating procedures (for the application of the retentive phase upon the channel walls) cannot guarantee a uniform film thickness across the channel width (Martin et al., 1982b). A non-uniform film thickness leads to an additional difference in sample solute velocities across the channel width and hence to an additional peak broadening (the effect is especially due to fact the coated layer is inevitably thicker in the corners near the side walls than in the middle of the channel, Martin et al., 1982b).

In the method according to the present invention, the movement of the mobile phase in, out and through a finite separating path, said path being defined by at least two wall elements, and in said path a retentive phase is arranged and through which a mobile phase and an injected sample to be separated into its components flow, characterized in that the driving in, out and through the separating path of the mobile phase is mainly caused by shear forces, which forces originate from a relative movement of at least one wall element compared to the other wall element. This driving is (in its basic form) completely or partly generated by either axially sliding or moving one part of the column wall relative to the other part, and/or by axially pulling or pushing (relative to the column or channel walls) a mechanic device through the column cross-section. The invention is hence based upon the fact that, instead of applying a force at the channel inlet only (as in the conventionally used pressure-driven chromatography), the fluid motion is generated by applying the flow generating force (i.e., a shear force) all along the column length. In this way, the fluid phase motion in the column can be generated without applying any external pressure difference.

Due to the fact that the mobile fluid motion is guided by a force which acts upon the fluid along the entire column length, the method and the device according to the present invention overcome the two main problems of pressure-driven chromatography mentioned in the introduction (existence of down-limit for d or dₚ due to the pressure drop limitation, and poor efficiency of the separation when a large aspect ratio column is used). As the chromatographic process can be effectuated without applying an external pressure difference, it is obvious that the existence of a down-limit for d has been circumvented in a natural way. The above listed problems encountered with pressure-driven flows in flat rectangular channels can also be greatly reduced. This can be demonstrated by rigorous mathematical calculations, but it is sufficient to notice that when large aspect-ratio (i.e. flat) rectangular columns are used in Capillary Zone Electrophoresis, where the mobile fluid motion is also guided by a force which acts upon the fluid along the entire column length, the negative effect (as it is encountered in pressure-driven systems) of the channel side-walls upon the peak broadening is greatly reduced (Tsuda et al., 1990).

In the method according to the present invention, the column pressure can be put at any desired value (i.e., atmospheric and supra- and sub-atmospheric) or can be operated at elevated temperatures. The device can hence be used to perform gas, liquid and super-critical fluid chromatography. As there is no pressure drop, the pressure can be ensured to be constant along the entire channel length. By sealing the entire envelope of the separating device, working at sub- or supra-atmospheric conditions poses no additional problems to the sealing between the different moving column parts. Using a gas phase carrier and, if required, operating the column at elevated temperatures, the separating device also serves as an alternative for conventional pressure-driven capillary GC. Working under sub-atmospheric conditions, the liquid sample and solvent can be vaporized in order to enhance the separation kinetics (due to the increased molecular diffusivity). Working at supra-atmospheric conditions, the column pressure can be selected above the critical pressure of any of the solvents which are suitable for use in super-critical fluid chromatography. The device hence allows to benefit from the enhanced separation kinetics offered by the use of super-critical fluid solvents (due to the increased molecular diffusivity), without any loss of column efficiency due to the pressure-drop effects which strongly reduce the performance of pressure-driven super-critical fluid chromatography (see Peaden and Lee, 1983).

The absence of a pressure drop drastically simplifies the sealing problem between moving and stationary channel wall parts, allowing to machine the column device out of 2 or more separate parts, which can then be joined together. In the most preferred embodiments, the different column parts make physical contact (they slide past each other), allowing a perfect control over the internal column dimensions. This concept allows the column device to be manufactured with a minimal of construction errors (in a preferred embodiment, a perfectly flat surface slides past another flat surface in which a groove-like channel has been arranged), making a highly miniaturized version of the invention conceivable. Considering the effect described in point ii) of the above list (see also Golay, 1981), the minimization of the construction errors is a vital requirement for the use of large aspect-ratio columns. An important source of deviations from the ideal channel dimensions is due to errors on the thickness δ of the retentive layer. This thickness should be such that an identical δ/d-ratio is obtained in every point of the channel cross-section. If not so, the net velocity of a given sample solute will also vary from point to point. This is due to the different capacity factor which it experiences along the parallel (axially oriented) flow-paths (Poppe, 1992, Schisla et al., 1993). Differences in net eluting velocity across the channel width of course lead to undesirable peak broadening. The possibility to assemble the column out of two separate, plate-like structures obviously enhances the control over the retentive phase thickness. Possible differences in eluting velocities across the channel cross-section can furthermore be reduced by using mobile phase fluids with a high molecular diffusivity (e.g., by operating the column under supercritical fluid or gas chromatography conditions). Since the influence of a non-constant δ/d-ratio upon the peak broadening depends upon the channel width according to w², the use of smaller column widths also greatly reduces the above mentioned effect.

The present invention hence opens the road to perform both LC and GC separations in large aspect-ratio columns with sub-µm thickness, allowing to combine the fast separation kinetics (leading to a reduction of the theoretical plate heights which is proportional to the reduction of the channel thickness d) with the advantageous detection properties resulting from the lateral dimension, which may be taken to be orders of magnitude larger than the channel thickness. As the theoretical plate height is directly proportional to the channel thickness d, this not only means a drastic reduction of the required analysis time, but also a decrease of the column length (proportional to d, Guiochon, 1981). Another advantage can be found in the increased column peak capacity, which is defined as the number of clearly separable different solute species a given sample may contain. As the peak capacity is inversely proportional to the square root of the theoretical plate number (Gohlin et al., 1994), it is obvious that the possibility to freely select the channel thickness and the channel length will allow to largely surpass the present peak capacity limits. The use of channel thickness-values which are smaller than the presently used values may also lead to a drastic decrease of the minimal detectable sample solute amount: when the gain in separation kinetics obtained from the use of small d-values is countered by increasing the capacity of the retentive phase (e.g., by simply increasing the thickness of the retentive layer), columns with much larger mass loadabilities and correspondingly smaller detection limits can be envisioned.

In a recent patent (Manz, 1997), a closed annular separating device is presented in which the use of a freely rotating internal toroidal ring is suggested as one of the possibilities to move the mobile phase. Using the internal toroidal ring as the means for the mobile phase transport, the sample solutes are circulated cyclically around the separating path. This implies that the sample solutes cyclically pass (as much as up to hundred times) the detection point, yielding inextricable chromatograms when the sample contains a large number of different species. In all the embodiments of the separating device according to the present invention, the separating channel is fully open at its end, allowing to evacuate the entire mobile phase from the separating column as soon as it has passed the detection point. In the separating device according to the present invention, the moving column parts either make a single passage along the active part of the retentive phase or either are allowed to leave the active part of the separating path and to pass through a so-called cleaning device where any detectable amount of the sample solutes is removed from the moving column parts and from the fluid they drag along. In either way, the present separating device operates in such a way that each sample solute species only makes one (detected) passage at the detection point. Adopting the cleaning principle, the separating column can be manufactured out of two rotating or recirculating (as in the moving belt system) planar structures which slide past each other (without the need for any moving internal device), thereby allowing a maximal control (provided the moving column parts are sufficiently rigid) over the channel thickness, and this in each point of the lateral channel cross-section: in the separating device described by Manz (1997), no means are provided to guarantee a fixed distance between its moving toroidal ring and the walls of its separating channel. As is clear from point ii) of the list given on page 4, the ability to control this distance is vital to obtain a satisfying performance. In all the embodiments of the device according to the present invention, special attention is paid to this point.

In the preferred versions of the device according to the present invention, the retentive phase is arranged exclusively on the stationary column parts, while the remainder of the device (moving parts, driving device (motor), injection and detection device, and, if required, a regeneration device for the moving column parts) appears as one block. This approach allows a very easy change of the retentive phase (whose chemical composition and/or physical structure largely determines the type of separation which can be performed), yielding at least the same operational flexibility as is obtained in conventional capillary GC and HPLC.

In a very attractive embodiment (the so-called opposite moving column parts device), the retentive phase is also subjected to a relative motion (opposite to the movement of the inert column parts) with respect to the detection point, while keeping the detection point fixed in space. In this concept, the velocities of retentive and inert wall parts can be selected such that the theoretical plate height is unaffected, while the residence time of the sample solute peaks in the separating channel is increased compared to the case in which the retentive phase is kept at rest (with respect to the detection point). In this way, the number of theoretical plates which can be achieved in a given column length can be drastically increased. uch an operation cannot be performed in a closed annular channel as the one described by Manz (1997) because in that particular set-up, the detection point is forced to move (or to remain stationary) together with the outer channel.

In a possible embodiment of the opposite moving parts device, the velocities of the retentive and the inert wall parts are selected such that part of the sample solutes move in the same direction as the solvent phase, whereas the other part of the sample solutes move in the opposite direction. Such a device is excellently suited to perform continuous chromatographic separations.

In the separating device according to the present invention, the action of the moving column parts can be combined with any other type of force field (electrical field, pressure force, gravitational, centrifugal force). When an additional force field is present, the moving column parts can be used either to generate the main fluid motion, or simply to establish an additional relative motion between the retentive and solvent (or carrier) phase. The additional force field may also serve as a means to transport the fluid phase from the separating channel to (and through, if required) the detection section.

Because the present invention favors the use of large aspect ratio channels, the device can be adapted to perform continuous chromatographic separations in the sense of Field-Flow Fractionation methods (the conceptual ideas behind these methods can be found in Giddings, 1966 and Giddings et al., 1976).
The invention shall be elucidated with reference to the figures and wherein is shown:
Fig. 1. a schematic representation of type I of the preferred embodiments;
Fig. 2. a schematic representation of type II of the preferred embodiments;
Fig. 3. an embodiment for a cleaning device;
Fig. 4. an embodiment for a dilution based cleaning device;
Fig. 5. some possible shapes for a separating path;
Fig. 6. an embodiment of type I, using a rotating flat plate as the moving wall;
Fig. 7. an embodiment of type I, using a rotating cylinder or cone as the moving wall;
Fig. 8. preferred embodiments for the moving belt-like arrangements;
Fig. 9. a schematic representation of the sliding surface concept;
Fig. 10. a schematic representation of the construction requirements originating from the sliding surface concept;
Fig. 11. an embodiment based upon the sliding surface concept;
Fig. 12. some variants of the profiled structures allowing column sealing and lateral straining of the moving column part;
Fig. 13. a moving wall embodiment based upon the arrangement of so-called upstanding edges;
Fig. 14. examples of other moving wall embodiments;
Fig. 15. definition of d and δ, and examples of possible column cross-sections;
Fig. 16. a schematic view of detection schemes making use of channel side-walls or stationary wall;
Fig. 17. a schematic view of detection schemes based upon multi-reflection techniques;
Fig. 18. a schematic view of the end-column detection technique;
Fig. 19. detection in side-channel machined in stationary plate;
Fig. 20. a laser Induced Fluorescence Detection using side-channel machined in stationary plate to guide excitation beam;
Fig. 21. using the moving column part to transport sample solutes to an off-column detector;
Fig. 22. a variant;
Fig. 23. arrangements to increase column length;
Fig. 24. a wounded column configuration;
Fig. 25. a basic version of the Opposite Moving Column Parts system;
Fig. 26. a dual Opposite Moving Column Parts system, with schematic representation of possible configuration for injection, detection and belt cleaning;
Fig. 27. a dual Opposite Moving Wall system, adapted for a continuous chromatographic separations;
Fig. 28. a possible embodiment for the Triple Moving Wall system;
Fig. 29. a possible embodiment for the Triple Moving Wall system, equipped with a semi-permeable moving wall;
Fig. 30. an example of the type of operation which can be obtained using a Dual Opposite Moving Wall system combined with an electrical force field;
Fig. 31. a possible configuration to perform continuous Field Flow Fractionation separations;
Fig. 31a. a 3D-structured retentive phase.

### DESCRIPTION OF PREFERRED EMBODIMENTS

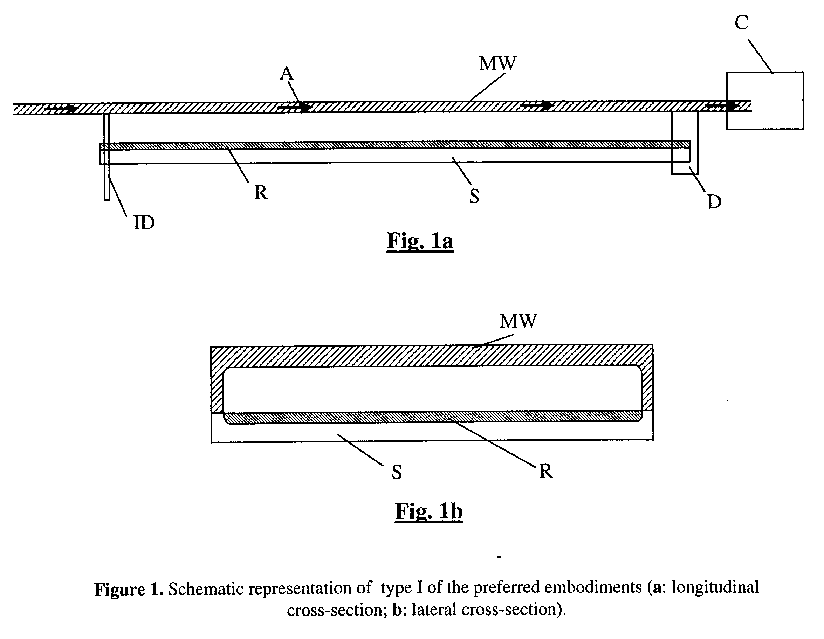

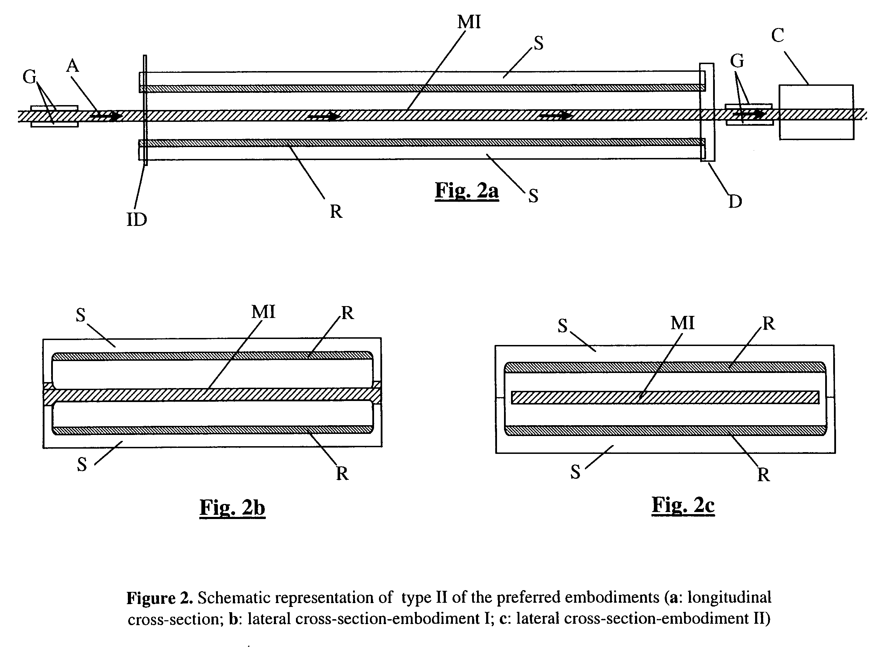

In the basic form of the separating device according to the present invention, the main movement of the mobile phase is completely or partly generated by either axially moving two or more column wall parts relative to each other (type I of the preferred embodiments, Fig. 1), or by axially pulling or pushing (relative to the column or channel walls) one or more mechanical devices through the column cross-section (type II of the preferred embodiments, Fig. 2). Apart from these two types, other embodiments are conceivable which are a combination of both types. In what follows, the column parts which determine the direction of the solvent (or carrier) phase motion will be referred to as the moving column parts (MW for moving column wall in Fig. 1, MI for moving column internal in Fig. 2). The other column parts (which preferably have no or only a small relative movement with respect to the detection point) will be referred to as the stationary column parts (S). The direction of the movement of the moving column parts is indicated by the arrows (A). Preferably, the retentive phase (R) is exclusively arranged on the stationary column parts. To obtain the typical chromatographic operation, a suitable injection device (ID) is arranged near the column inlet, and a suitable detection device (D) is arranged near the column outlet. In all the embodiments according to the present invention, the moving column parts are guided out of the active part of the separating channel. In the embodiments in which the moving column part(s) reenter the separating path, a moving column part cleaning and/or diluting device (C) is preferably provided which allows to remove and/or to dilute the sample solute species from the moving column parts. In this way, the sample species only make a single (detectable) passage at the detection point.

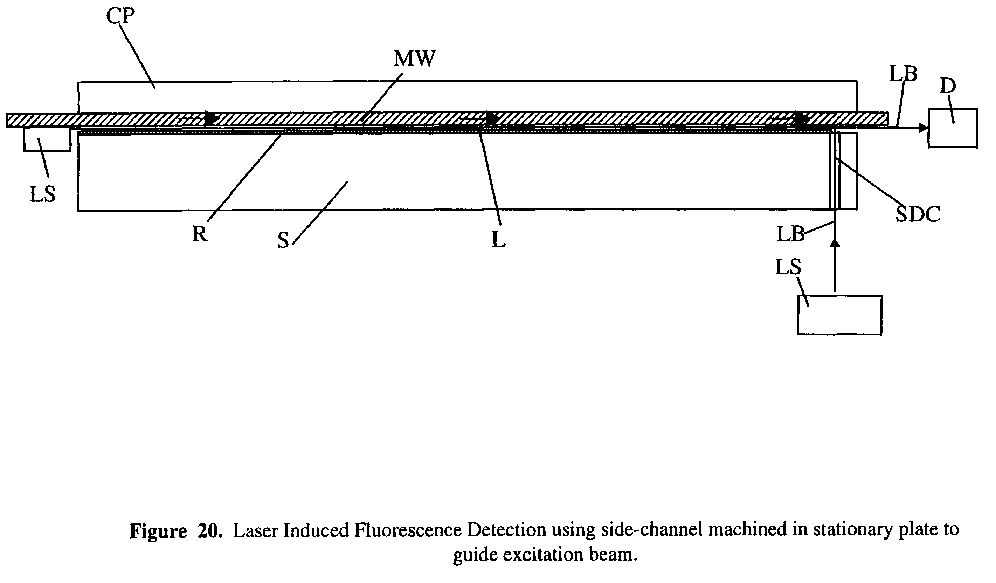

For type II of the preferred embodiments, it is also conceivable (Fig. 20) that the moving column internal (MI) is positioned within the channel by the hydrodynamic properties of the mobile phase. In this case, special arrangements have to be made in order to control the position of the moving mechanical device from outside the separating channel (e.g., by providing the pre- and post-column mechanical guiding devices G).

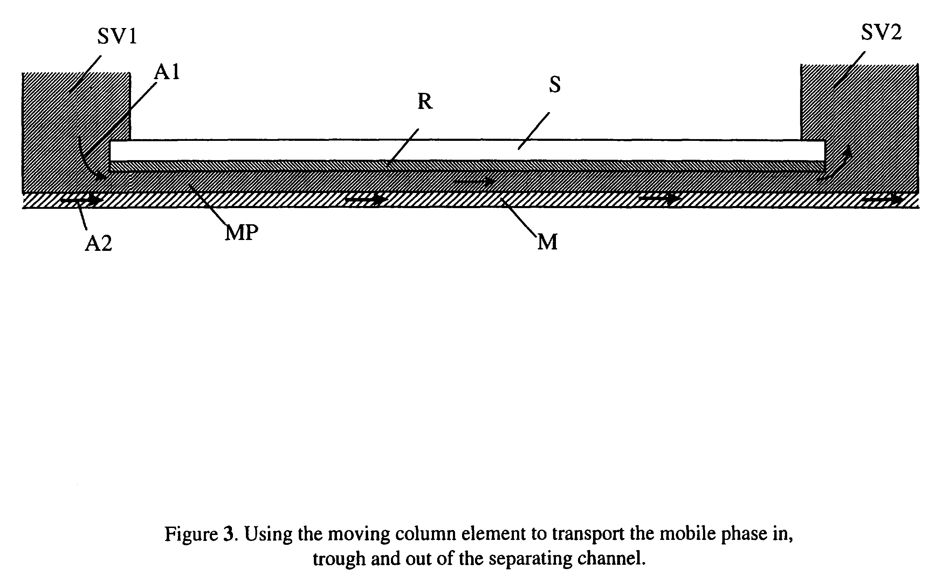

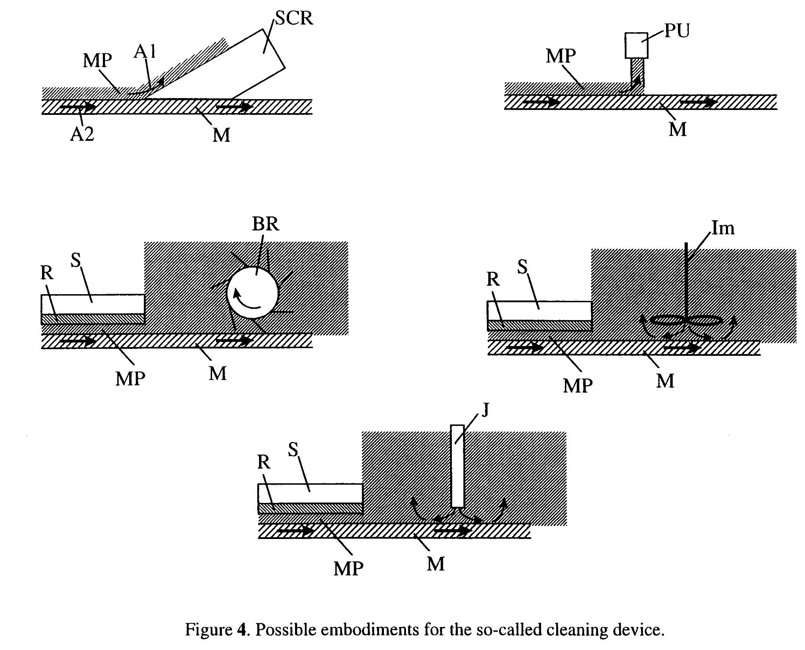

Fig. 3 schematically shows how the moving column part(s) (M) serve as a means to transport the mobile phase (MP) out of the pre-column solvent vessel (SV1) into the separating channel, and out of the separating channel into the postcolumn solvent vessel (SV2). The mobile phase flow is represented by the arrows A1, the column wall movement is represented by the arrows A2. Possible embodiments for the cleaning devices, which allow the removal or dilution of the liquid sticking to the moving column parts after they have left the separating path, are given in Fig. 4. The liquid film (MP) containing the sample solute species can be removed and/or diluted by means of a scraping device (SCR), a pump (PU), a brushing device (BR), an impeller system (Im), an impinging jet system (J), an evaporation system, or any other suitable means.

The column parts may be machined out of any suitable material type. The use of composite materials is conceivable as well.

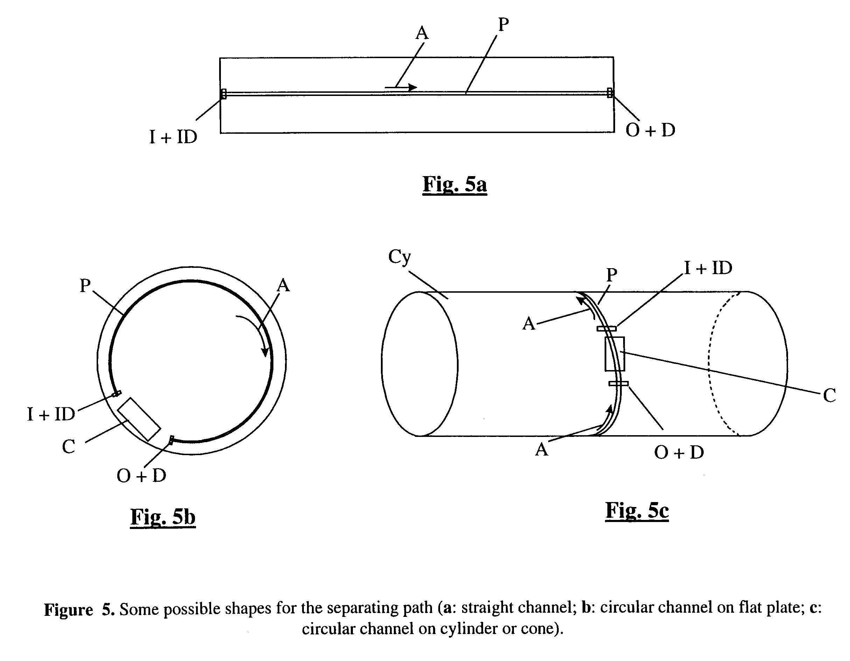

Some variants of the possible separating path (P) shapes are given in Fig. 5. The separating path can be implemented on a support surface of arbitrary shape (preferably flat, conical, cylindrical (Cy). When a circular channel is used, sufficient space has to be provided to arrange a cleaning device (C) between the injection (ID) and detection point (D), in order to remove possibly entrained sample solutes from the moving column parts.

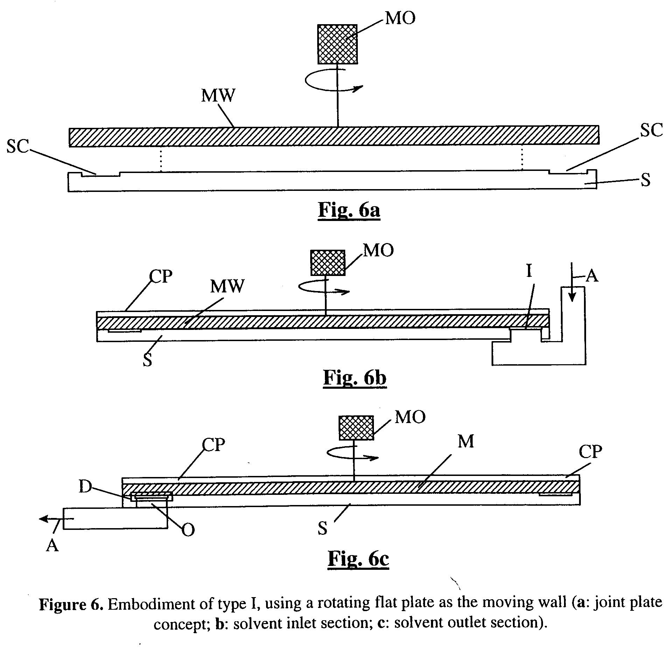

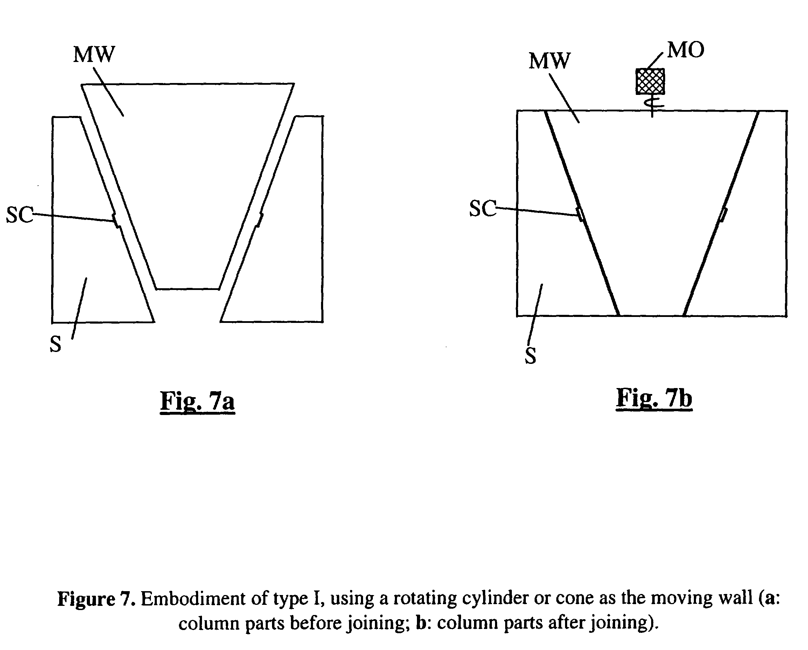

A possible arrangement for the moving channel wall parts of the type I-version is to implement them on a rotating disk (Fig. 6) or similarly planar structure, on a rotating cylinder or cone (Fig. 7), or on any other suitable rotating surface. The stationary parts are then preferably arranged on a matching surface, thereby favoring the sealing of the effective column section. The separating channel (SC) is preferentially arranged exclusively on either the moving (MW) or on the stationary surface (S). The motion of the moving column parts can be driven by any suitable means, preferentially a motor device (MO) equipped with any suitable transmission means. If required, a cover plate-like device (CP) can be provided in order to press the moving surface firmly to the stationary surface, thereby favoring the sealing between both column parts. In Fig. 6, possible arrangements for the solvent in- (I) and outlet (O) systems are given as well. The movement of the solvent entering and leaving the device is indicated by the arrow A. For the rotating cylinder or cone variant shown in Fig. 7, the solvent in-and outlet systems can be arranged in a similar manner.

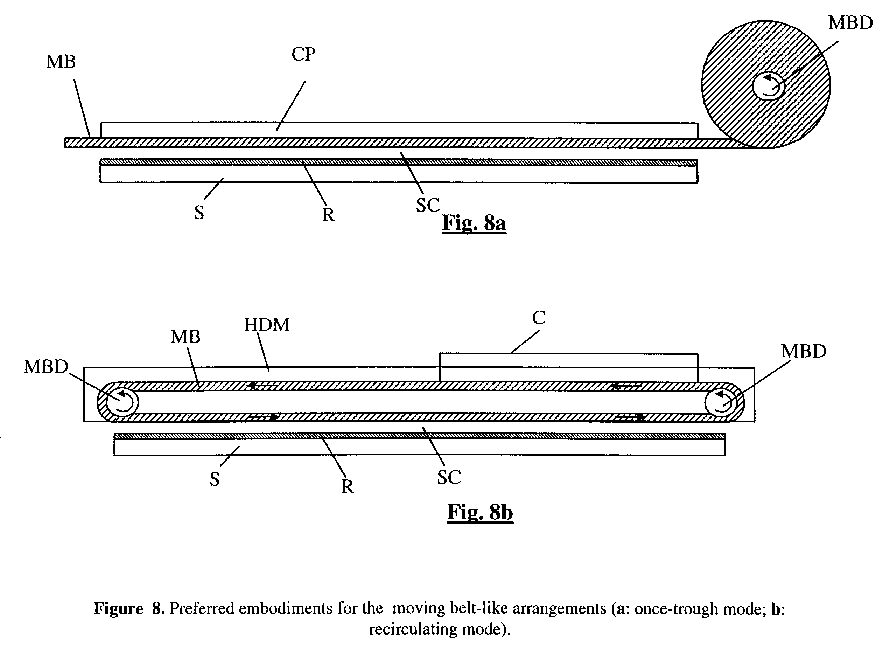

The moving column parts of the type I-version and type II-version can also be arranged using moving belt-or conveyer belt-like systems (MB). The motion of the moving column parts can then be arranged using the conventional driving (MBD) and housing (HDM) devices which exist for moving belt-like systems. Two preferred embodiments are given in Fig. 8. If desired, arrangements can be made to put the belt under axial and lateral strain to improve the control over the functioning of the belt (e.g., to prevent sagging). When the moving belt is arranged in a recirculating mode, a belt cleaning device (C) has to be provided.

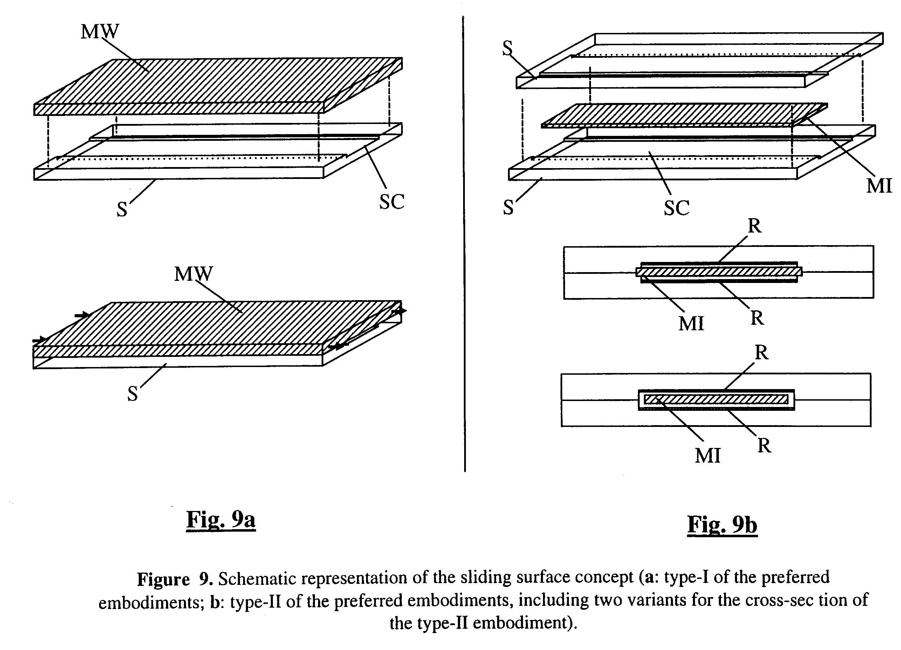

In the preferred embodiments of the invention, a perfectly flat surface (MW or MI) slides past another flat surface (S) in which a groove-like channel (SC) has been arranged (Fig. 9). According to this concept, the position of the moving column part (MW or MI) is controlled by pressing it against the other column parts (S), allowing to assemble and operate the column device with a minimum of deviations from the required channel thickness d, and this in each point of the column cross-section. A large group of other embodiments (including those with more than one moving column part) can also be designed in a similar manner, i.e. the different column parts make physical contact and/or serve as each others support. The absence of a pressure drop considerably simplifies the sealing problem between the different column parts.

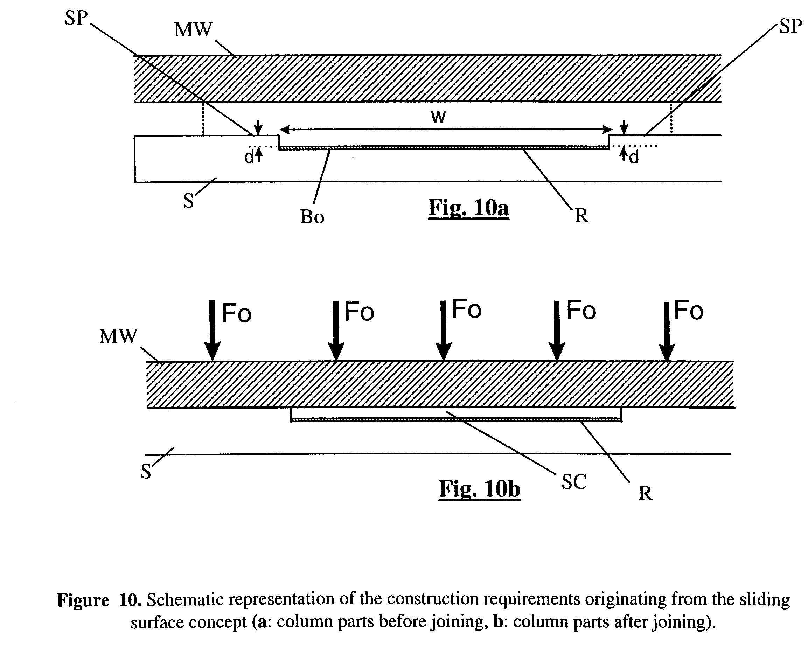

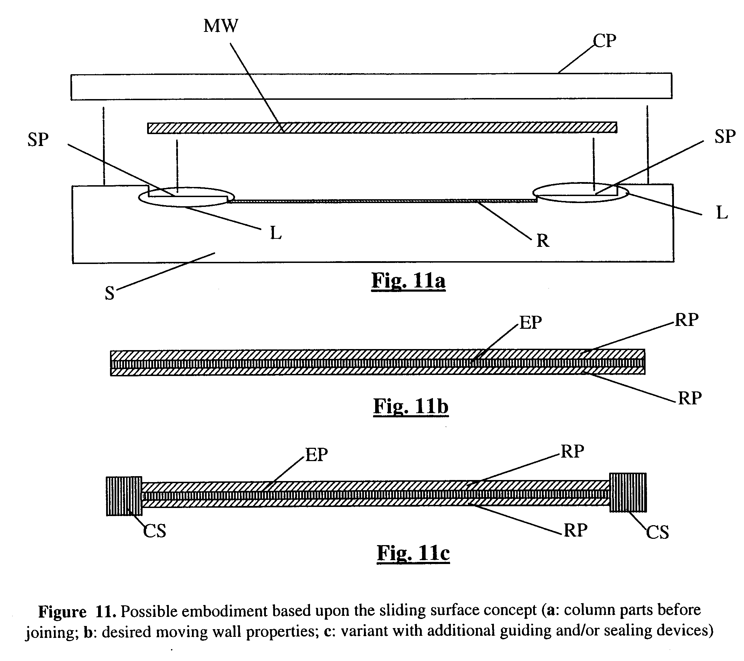

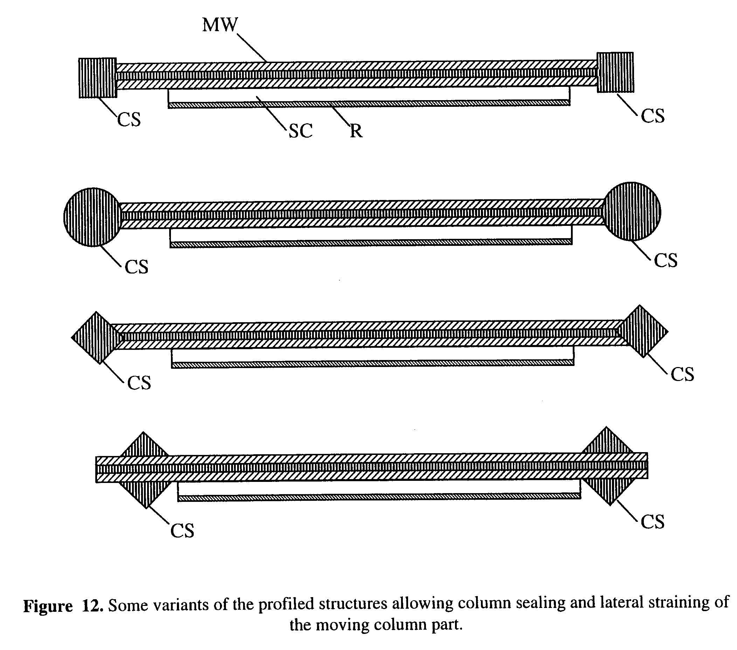

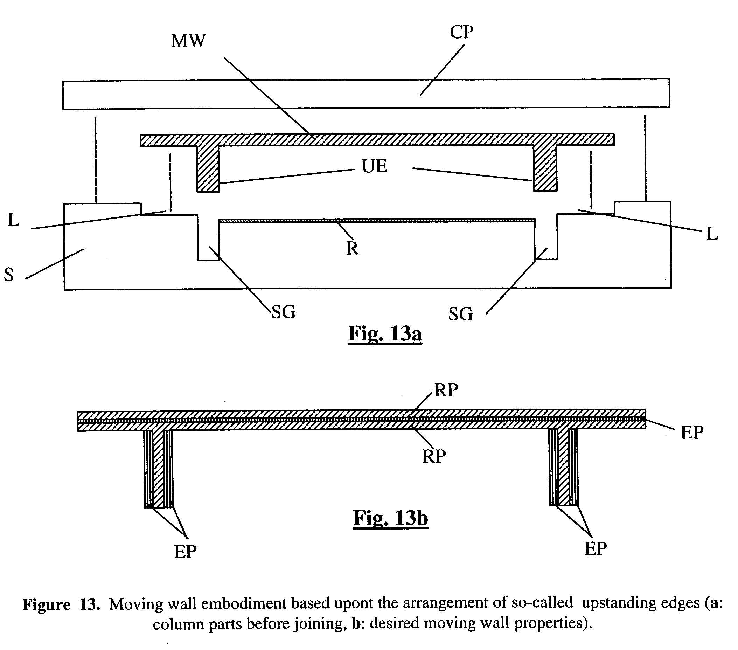

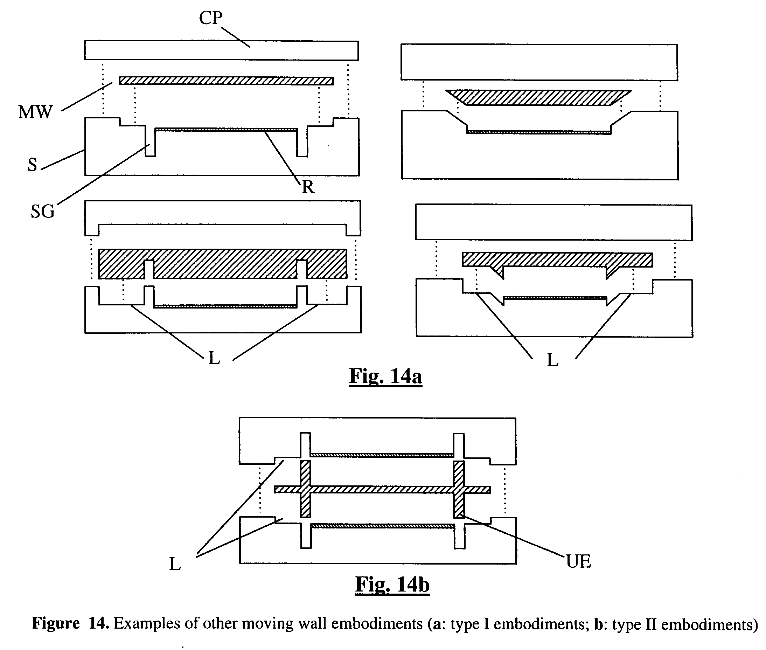

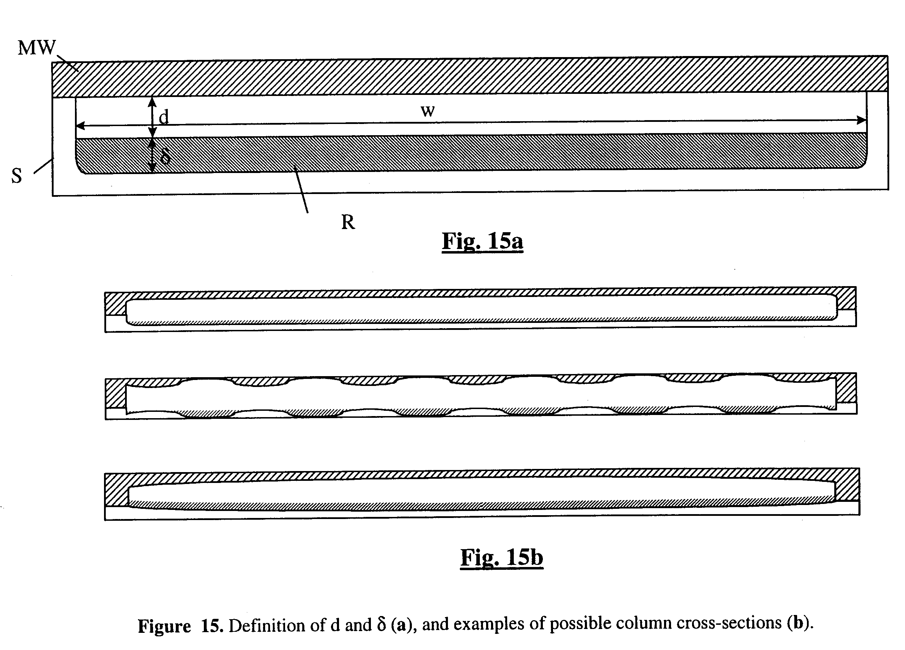

In a preferred version (Figs. 10 and 11), a perfectly flat moving channel wall (MW) is pressed against the perfectly flat surfaces (referred to as side plates, SP) immediately adjacent to the channel groove (SC). The only part which has to be machined with a high precision is then the groove-like, flat rectangular channel (SC). The only additional design specifications is then given by the fact that the side plates and the bottom (Bo) of the separating channel should run perfectly parallel. Fig. 10 also shows the definition of the channel thickness d and channel width w (see also Fig. 15). To favor the sealing between both channel wall parts, a force (Fo) may be applied in a manner similar to the arrangement shown in Fig. 10. Using a preferentially composite moving channel wall (MW) of the type shown in Figs. 11 and 12, its elastic parts or properties (EP) allow to correct for possible construction errors of the other column parts and may contribute to the sealing of the column wall, its rigid parts or properties (RP) should prevent sagging. The surfaces which are in contact with other column parts should be sufficiently smooth in order to limit the friction resistance. If required, additional means (CS) can be arranged (see Fig. 11) on the moving column parts to put the moving column part under lateral strain to prevent sagging and/or to ensure the column sealing. In this case, appropriate fitting grooves should be machined in the stationary column parts. In Fig. 10, the positions (L) where the lubrication of the moving column parts can be arranged using the mobile phase liquid are indicated as well. Some variants for the additional profiled structures (CS) which can be arranged on the moving column parts in order to ensure the column sealing and/or the lateral straining of the moving column parts are given in Fig. 12. It is obvious that such structures (CS) may be arranged on the stationary column part as well. In this case, the corresponding fitting grooves should be machined in the moving column parts (see e.g., Fig. 14). Adapting the moving device(s) in a manner such as represented in Fig. 13 (i.e., providing the moving device with so-called upstanding edges, UE), it is possible to ensure the sealing of the separating channel without posing any additional requirements on the construction tolerances of the side plates: using the elastic properties of the upstanding edges, the sealing occurs by forcing the upstanding edges to move in the side-grooves (SG) which are arranged just aside of the retentive layer (R). Examples of other conceivable moving channel wall shapes are given in Fig. 14. The parts allowing the column sealing and allowing the application of any type of suitable lubricant are indicated as well.

Definitions of the channel thickness d, retentive layer thickness δ and channel width w, together with some possible variants for the column cross-section, preferably having a large aspect ratio, are given in Fig. 15. Although the examples are given for the type (I)-version of the invention, the possible column cross-sections for the type (II) version can be drafted in a similar manner. Columns with aspect ratios near unity (circular, square,) are conceivable as well. They allow to avoid the peak broadening effects originating from the presence of side-walls in large aspect ratio channels, but they are less advantageous for the detection of the sample solutes. Although the wetted surfaces of the column parts should preferably be smooth, the use of profiled or structured wall parts, for example to enhance the mobile phase mass transfer, is also conceivable.

The separating device according to the present invention allows the use of all conceivable detection means. Examples for liquid phase detection methods can be found in Poppe (1992): UV/VIS absorbance, IR absorbance, refraction index detection, fluorescence detection, NMR, mass spectrometry, conductivometric and amperometric detection, radiochemical detection. Examples for gas phase detection methods can be found in Fifield and Kealy (1990): thermal conductivity detection, flame ionization detection, electron capture detection, flame photometric detection, mass spectrometry.

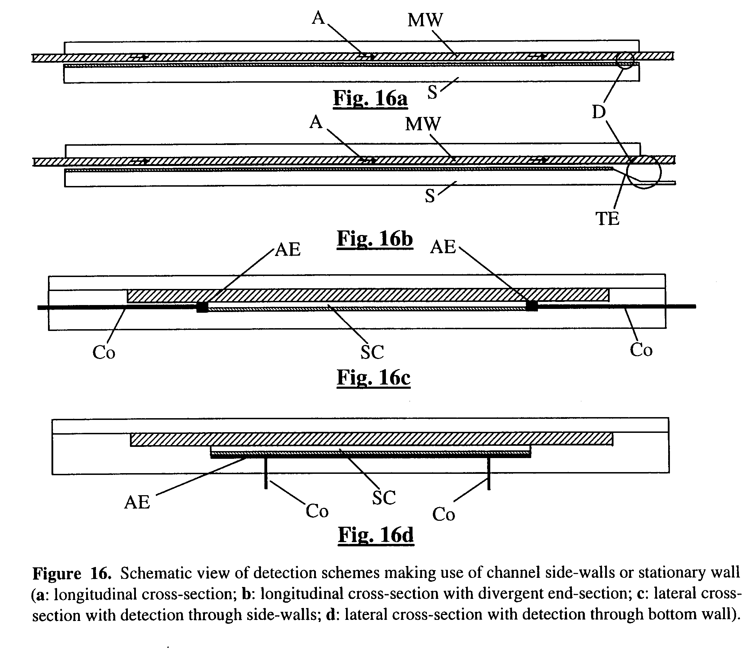

Figs. 16-22 show a number of possible detection schemes which are suitable for use in combination with the different variants of the presently proposed separating device. Other detection schemes are however also conceivable. All proposed detection schemes are such that they can be integrated with the separating channel, allowing to use so-called on-column detection schemes. There is however no restriction on the use of off-column detection schemes. In what follows, the parts of the detection device which have to be in contact with the mobile phase, either directly or indirectly (such as for the optical methods) will be referred to as the active detection elements (AE).

Preferably the detection occurs in the channel itself (in order to avoid extra-column peak broadening), but if the active detection elements are difficult to arrange within the channel, the detection may occur just behind the channel outlet.

Some possible on-column detection schemes:
- detection in separating channel
   a schematic view of some of the possible detection schemes which can be arranged within the separating channel (SC) are given in Fig. 16. The possibility to use a divergent end-section (TE) is suggested as well. As indicated, the active detection elements (AE) of the detection device can be arranged in the side-walls or in the stationary plate wall of the separating channel. The connections (Co) to the main detector unit can be drafted in various ways.

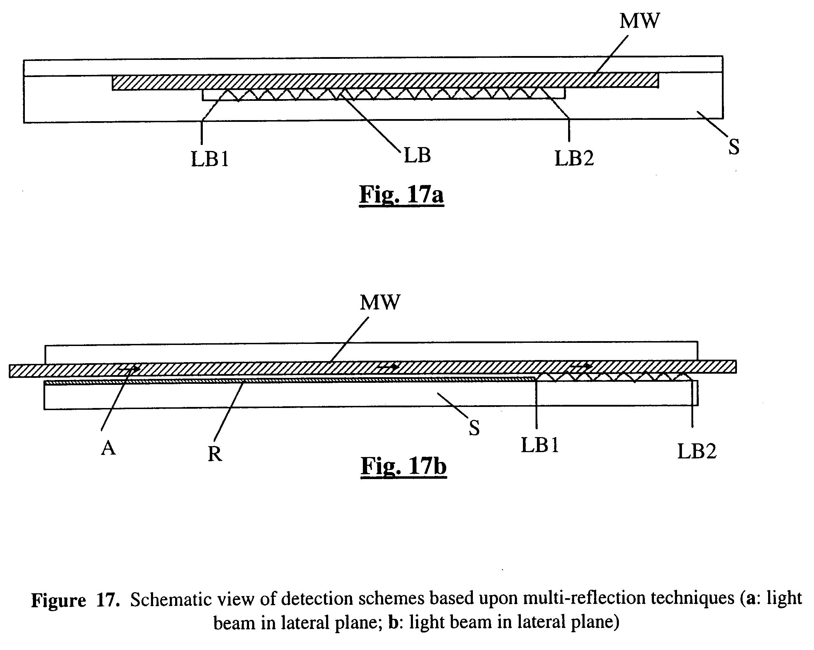

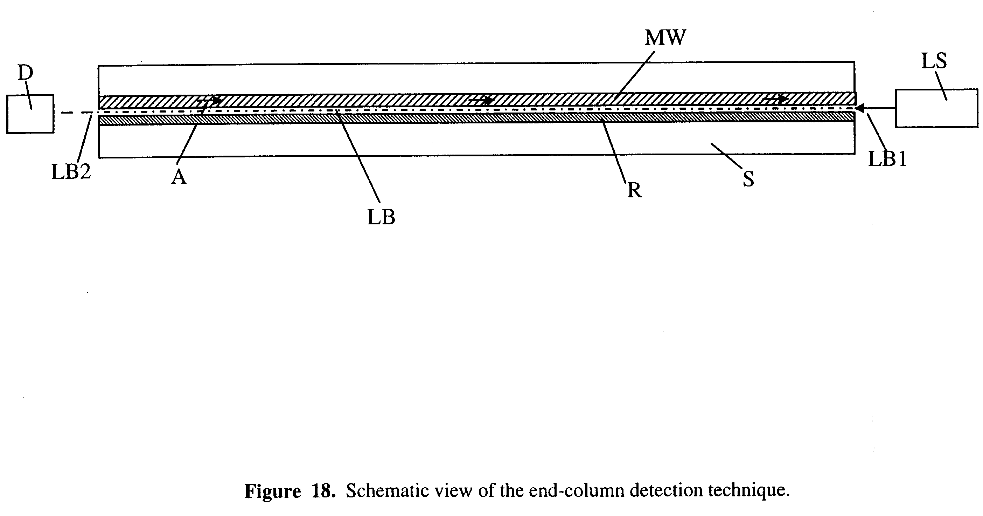

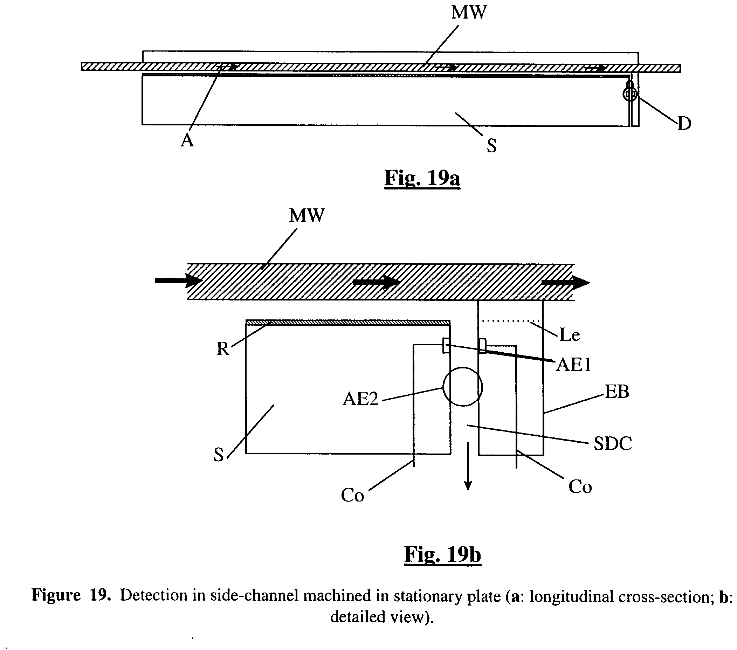

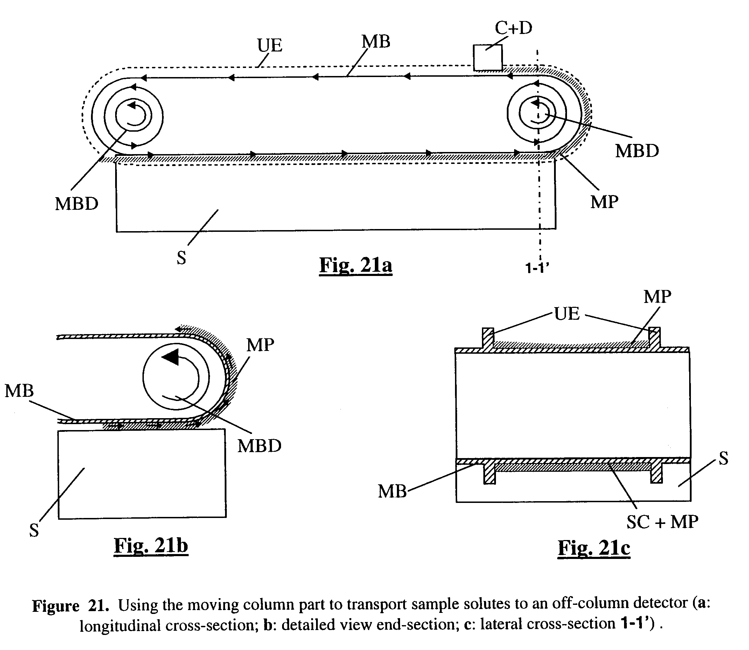

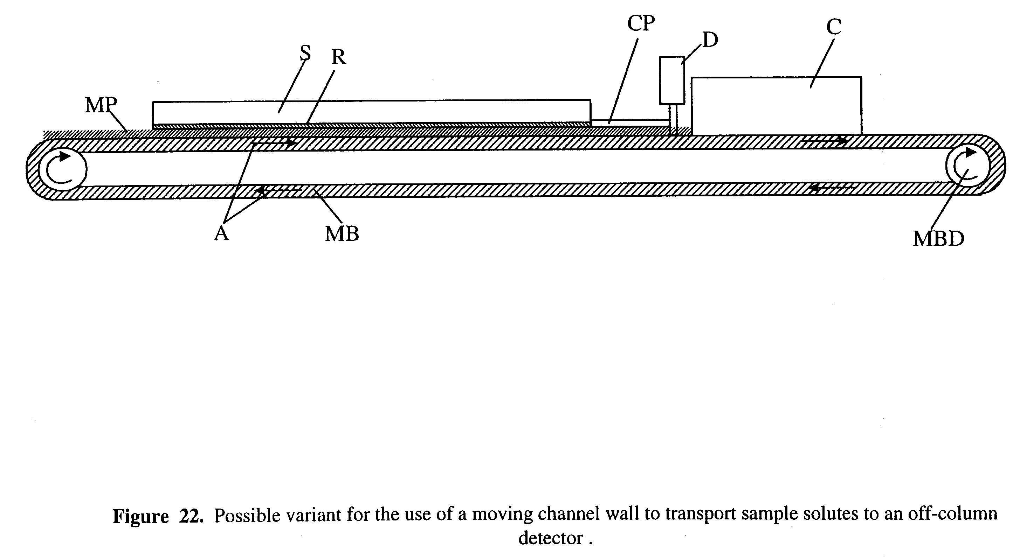

   For optical methods, it has to be noted that the passage of the light beam(s) (LB) may either occur in a single-passage mode (Fig. 16) or in a multi-reflection mode (as described in Albin et al., 1993, see Fig. 17). The direction of the light beam(s) may be either lateral, radial or axial (as in the so-called end-column detection, Albin et al., 1993, see Fig. 18). For some of these schemes, the moving wall has to be used to reflect the light beam. In the figures, the points where the light beam enters and leaves the column section are respectively denoted as LB1 to LB2. It should be obvious that the positions of LB1 and LB2 are perfectly interchangeable. In Fig. 18, possible positions for the light source (LS) and the active detection elements (D) are indicated as well.
- detection in (or upstream of) side channel (SDC) cut trough stationary and/or side walls of the separating channel. Such a detection channel (SDC) can either be used as a means for evacuating the mobile phase fluid from the column to perform the detection under conditions which are more advantageous for the envisioned detection scheme (Fig. 19). The flow in this side channel may be driven by any type of force field, including electrical, centrifugal, gravitational, pressure or suction force and even capillary action force. The side channel may also simply serve as an additional access to the column. It should be noted that height of the end-block (EB) of the stationary wall may also be limited to the level (Le) or to any other suitable level. In Fig. 19 possible arrangements for a number of different detection schemes (absorption methods, electrochemical methods, MS.) are indicated as well. The active detection elements (AE1) may be arranged in the manner shown in the figure, such that the detection medium (light beam, electrical field) passes the channel in the radial direction, or they may be arranged such (AE2) that the detection medium passes the channel in the lateral direction. In Fig. 20, the side channel is used to guide the excitation beam necessary to perform a Laser Induced Fluorescence detection. When this detection method is envisioned, a large variety of other arrangements for the guiding of the excitation and the detection beam are conceivable: the excitation beam and detection beam may be guided through the separating channel via the column in- and outlet, via the column side walls, via a side channel cut in the stationary wall, or via any other suitable means.
   Note: in the detection scheme presented in Fig. 19, the extra-column peak broadening can be limited by taking the width and thickness of the side-channel close to the width and thickness of the separating channel.
- upstream of column end (Fig. 21)
   In this method, the moving column part(s) is (are) used to transport the mobile phase (at least a sufficient part of it), containing the separated sample solutes, to a detector (a mass spectrometer or any other suitable detection device) positioned upstream of the column end. Preferentially using a moving column part upon which so-called upstanding edges (or any other suitable means, UE) have been arranged to guide the fluid (MP), it will be possible to guide at least part of the liquid towards the detection section with a minimum of axial intermixing. A possible variant is given in Fig. 22. If required, an inert cover plate (CP) can be provided to minimize the disturbance of the liquid film.

Preferably, the detection and injection devices, the solvent in- and outlet systems, the solvent vessel and the driving devices for the moving column parts are all grouped in one block, whereas the retentive phase is arranged on a separate, easily removable plate or other suitable device. Considering furthermore that no high-pressure fittings between column and other parts are needed, it is obvious that the retentive phase can be replaced very easily, allow the separating device to combine an on-column detection scheme with a large degree of operational flexibility.

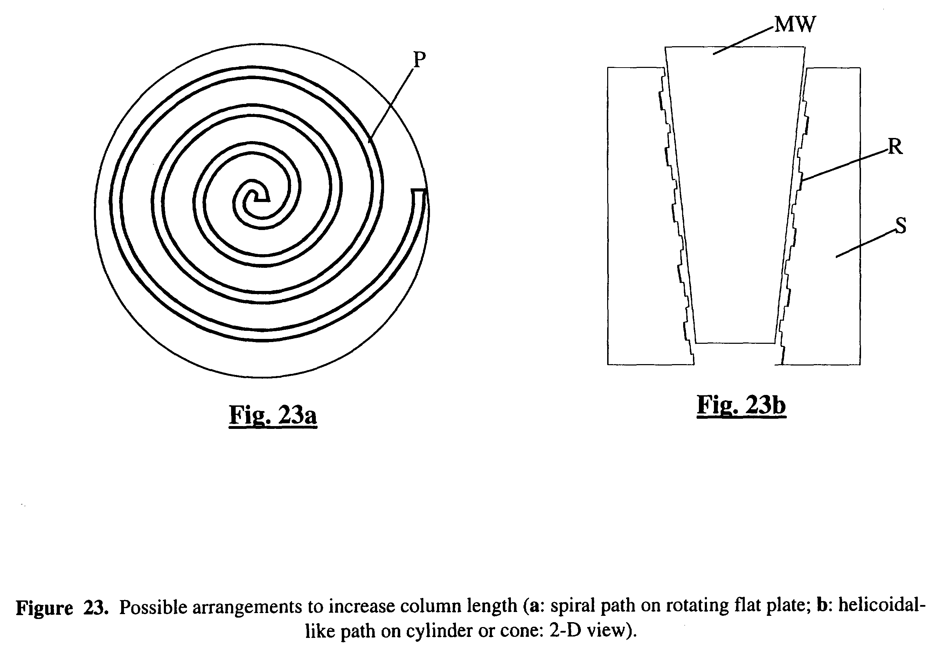

One of the advantages of the absence of a pressure drop is the possibility to use extremely long columns, allowing to reach theoretical plate numbers which are far beyond the present performance limits. Fig. 23 shows a few possible designs in which the flow path (P) is considerably increased compared to the basic design. Other separating path shapes (arranged on similar surface types or on any other suitable surface types) are conceivable as well.

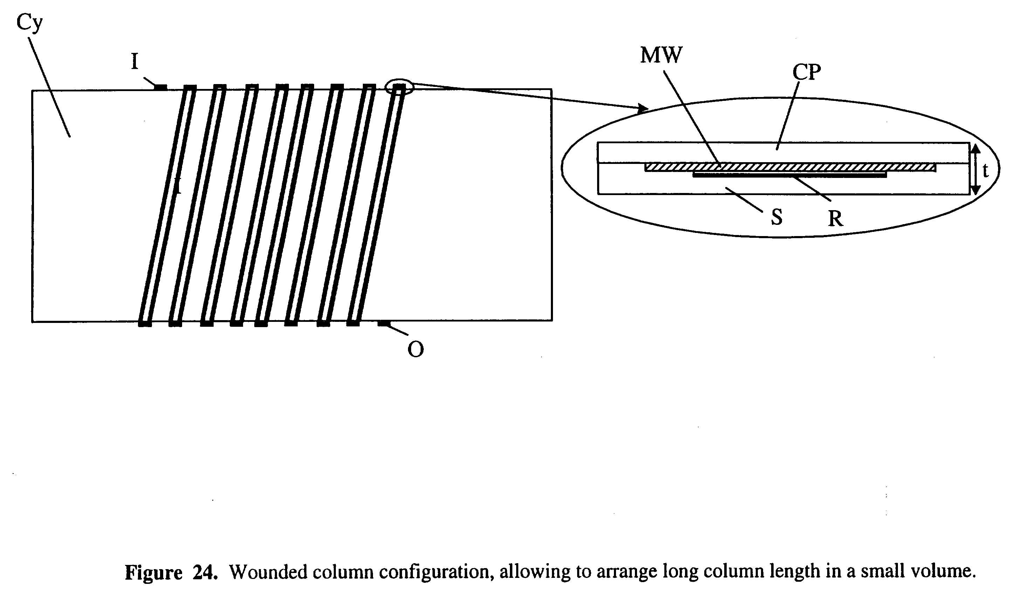

Using the moving belt-like configuration presented in Fig. 6, the column device can be made sufficiently flexible by selecting the appropriate column material(s) and by limiting the total column thickness (t) to a few millimeter. In this way, the column can be wound around a cylinder (Cy) or similar device (Fig. 24). This will allow to arrange long column lengths (up to 100m and more) in a relatively small volume.

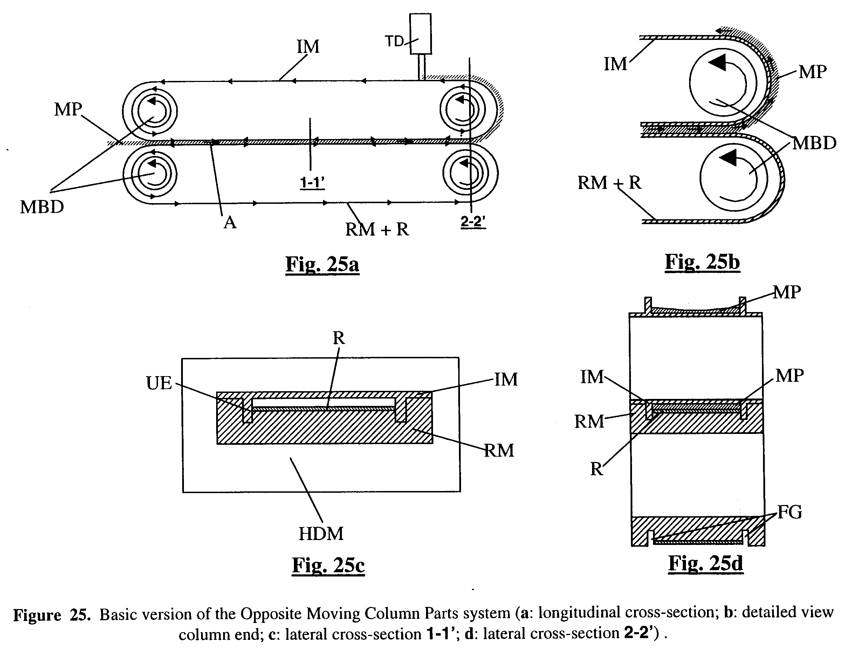

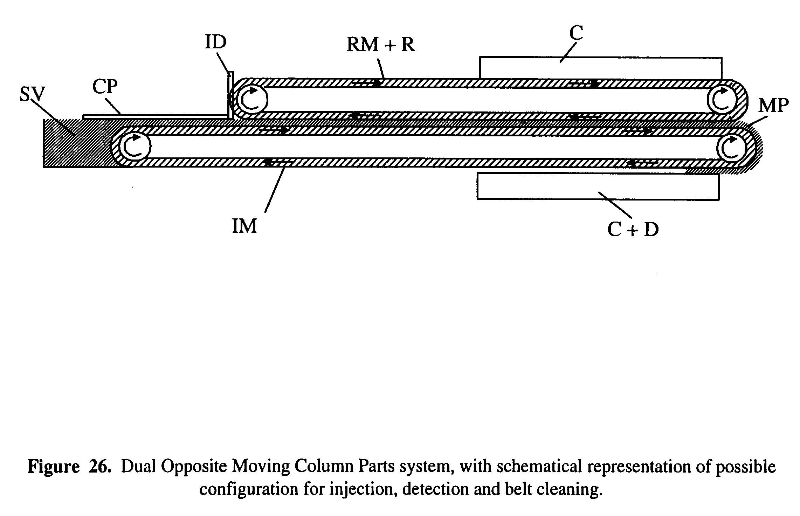

In some especially preferred versions of the invention (the so-called Opposite Moving Column Parts-systems), the need for long columns to reach large theoretical plate numbers can be circumvented by subjecting the retentive phase to a relative motion with respect to the detection point, while keeping the detection point fixed in space. A possible design, based upon the use of a double moving-belt system, is given in Fig. 25. One moving column part (referred to as the inert moving column part, IM) determines the direction in which the solvent of carrier fluid moves, whereas the other moving column part (referred to as the retentive moving column part, RM) is covered by the retentive phase and moves in the opposite direction. Preferably, the moving column parts are provided with some kind of guiding devices (e.g., by arranging upstanding edges (UE) on one moving column part and arranging the corresponding fitting grooves (FG) on the other moving column part, as shown in the cross-sectional view presented in Fig. 25), which can, at the same time, ensure the channel sealing and allow to control the relative (lateral) position of the two moving column parts. Preferentially, the un-wetted sides of the moving column parts should have a low friction coefficient, allowing to control the movement and the position of the column parts by sliding them past the walls of a tight-fitting housing device (HDM). In the considered device, the velocities of retentive and inert column parts can be selected such (retentive column parts move slower than retentive column parts) that the theoretical plate height is unaffected, while the residence time of the sample solute peaks in the separating channel is increased compared to the case in which the retentive phase is kept at rest (with respect to the detection point). In this way, the number of theoretical plates which can be achieved in a given column length can be drastically increased. The fixed detection point can be obtained by arranging the detection near the solvent or carrier outlet. In a preferred variant (Figs 25-26), the inert belt (IM) can be used to transport the sample solutes (or at least a part thereof) towards a mass spectrometer, or any other suitable detection device, positioned at a given distance upstream of the separating channel. Such a fluid transport system can be considered to work in a manner similar to the moving belt interfaces which exist for mass spectrometry detection. It should be noted that the ability to transport the liquid film upstream of the column end is favored by providing the moving belt with the upstanding edge system or any other similar device. In a preferred embodiment, cleaning devices for both the inert (IM) and the retentive moving (RM) column parts are provided (Fig. 26).

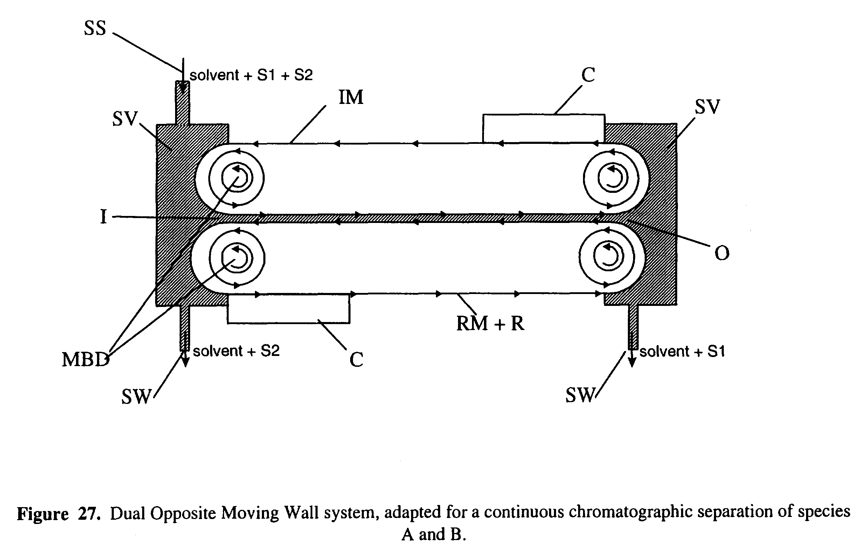

In a special embodiment of the device shown in Figs 25-26, the velocities of the inert (IM) and the retentive moving column parts (RM) are selected such that part of the sample solute species (S1) moves in the same direction as the solvent (or carrier) phase, whereas the other part of the sample solute species (S2) moves in the opposite direction. Such a device (schematically represented in Fig. 27), equipped with means for continuous sample supply (SS) and continuous withdrawal (SW) of separated substances, is excellently suited to perform continuous chromatographic separations. To ensure an optimal operation, moving column part cleaning or regeneration devices (C) have to be provided.

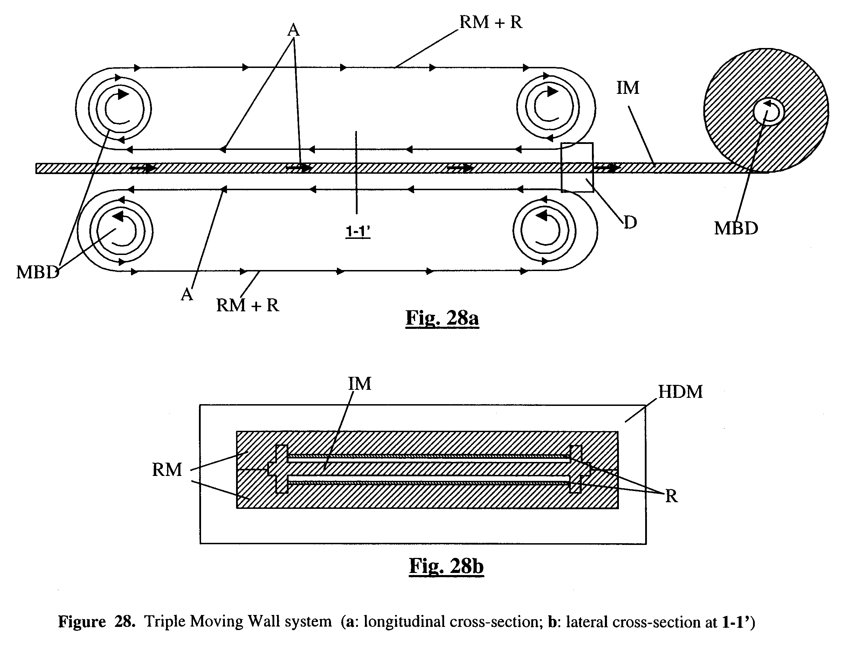

Using three instead of two moving column parts, a device operating in the sense of the schematic representation in Fig. 28 can be drafted. In this device, the two lateral column walls (RM, both provided with an identical retentive layer R) simultaneously (i.e. with the same speed) move in the direction opposite to the movement of the inner moving belt (IM). The main mobile phase motion is then determined by the inner moving belt, whereas the (slower, but opposite) motion of the retentive column walls serves to increase the residence time of the sample in a manner similar to the one represented in Figs. 25-26. The device can also be used to move one part of the sample solute species in a direction opposite to the direction of the other part of the sample solute species, in a manner similar to the one represented in Fig. 27.

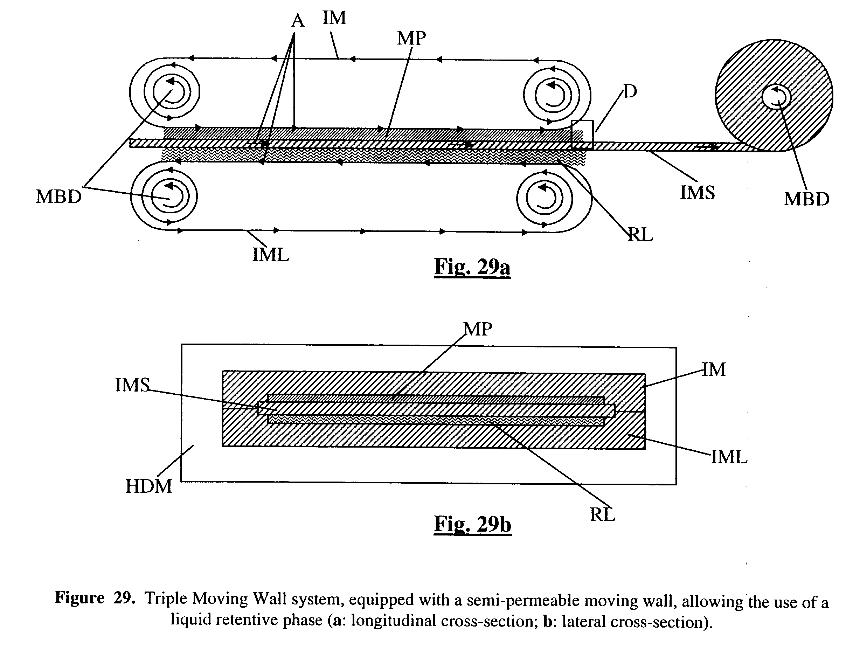

Using a semi-impermeable moving column internal (IMS, impermeable for the solvent or carrier gas phase and the retentive liquid, permeable for the sample solutes) with a negligible mass transfer resistance, variants of the device represented in Fig. 28 are conceivable in which arrangements are made to allow the use of a moving liquid retentive phase (LR) instead of a solid (or of a liquid phase supported by a solid porous structure) retentive phase (Fig. 29). In the device presented in Fig. 29, the mobile liquid phase is contained between a moving inert column wall (IM) and the moving, semi-impermeable column internal (IMS), both moving in the same direction. The liquid retentive phase (RL) is contained between the moving, semi-impermeable column internal (IMS) and an opposite moving (or stationary) inert moving channel wall (IML).

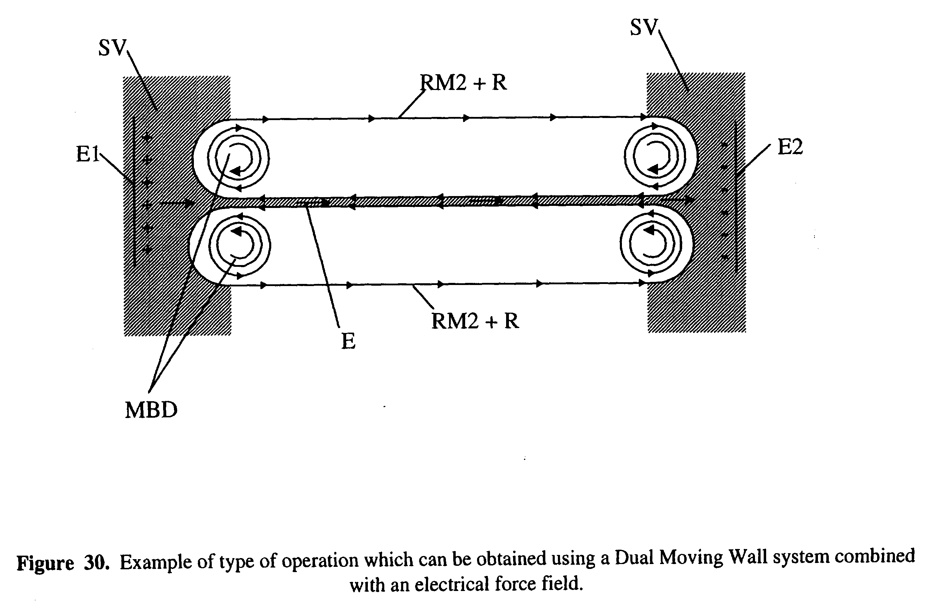

The action of the moving column parts can be combined with any other type of force field (electrical field, pressure force, gravitational, centrifugal force). When an additional force field is present, the moving column parts can be used either to generate the main fluid motion (as was the case in al the previous examples), or simply to establish an additional relative motion between the retentive and solvent (or carrier) phase. In the first case, the additional force field may simply be used to transport the fluid phase from the separating channel to and through the detection section and/or to enhance the action of the moving column parts. In the latter case (example is given in Fig. 30), the retentive phase is arranged on the moving column parts (RM1 and RM2) and the relative motion between the retentive and mobile phase can be used, in a manner similar to the one represented in Figs. 25-28, to increase the residence time of the sample solutes, or to move one part of the sample solute species in a direction opposite to the direction of the other part of the sample solute species. The example given in Fig. 30 is based upon the application of an electrical field, creating the electrophoretic flow E.

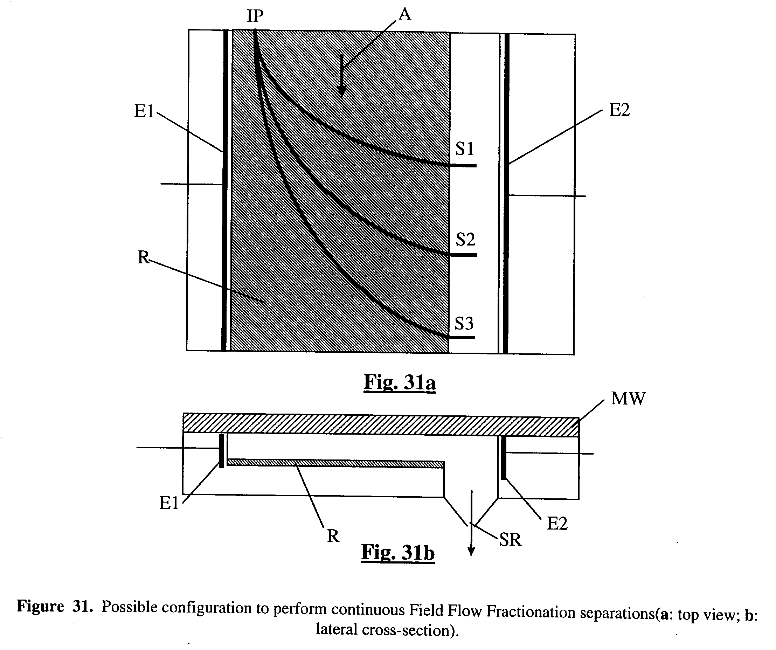

The action of the additional force field can also be applied perpendicular to the movement of the sliding surfaces, allowing to perform continuous separations in the sense of the Field-Flow Fractionation methods described by Giddings, 1966 and Giddings et al., 1976. The example given in Fig. 31 is based upon the application of an electrical field which is created by the electrodes E1 and E2 arranged on both sides of the lateral channel cross-section. As the sample solutes are continuously fed to the sample introduction point (IP), the solutes (S1) with a large affinity for the retentive phase R will preferentially stay near the column inlet and will hence preferentially move in the direction of the electrical field. The solutes (S3) with a small affinity for the retentive phase R will preferentially move along with the flow (direction indicated by arrow A) generated by the moving column wall (MW). Solutes with an intermediate affinity (S2) will then be collected at an intermediate position. In this way, the different solute species can be collected continuously (via the outlet SR) at different positions along the axial flow path of the column.

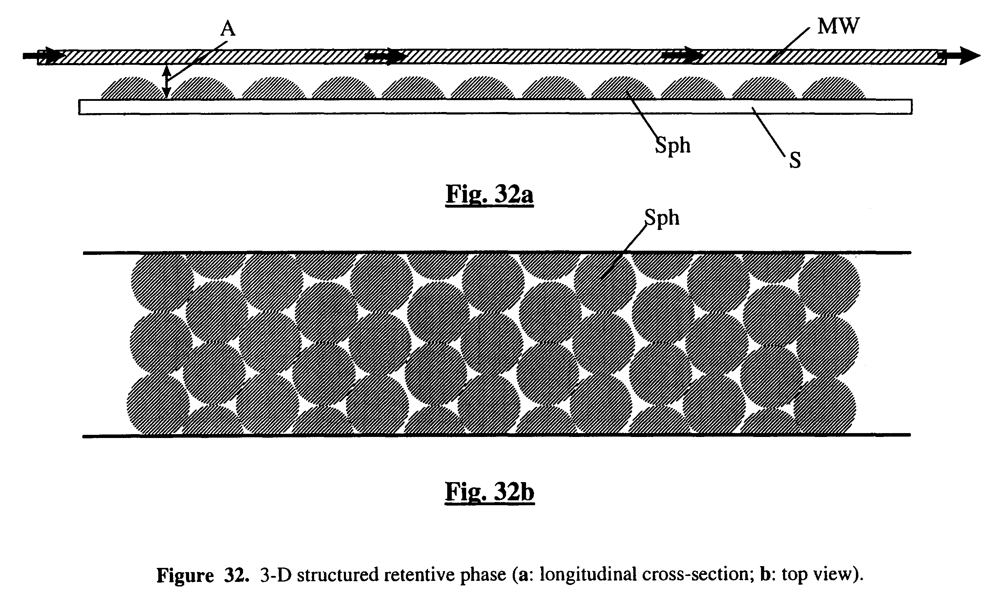

The use of structured inert and retentive walls is demonstrated in fig. 32. As it is possible to arrange the separating channel out of (at least) two separate wall parts, it will be possible to manufacture the retentive phases such that they have a predefined 3-D structure. Such a structure, preferably a 2-D array of regularly spaced cylinders or semi-spheres (Sph) with submicrometer dimensions, could be used to reduce the mobile phase mass transfer resistance (by inducing an additional mixing in the direction indicated by the double arrow A), as well as the retentive phase mass transfer resistance (it is a well known fact that cylinders or spheres yield a smaller stationary phase mass transfer resistance than flat geometries). Arranging such 3-D structures on the inert walls may also contribute to a reduction of the mobile phase mass transfer resistance (these structures will induce an additional mixing, similar to the one denoted by the arrow A).

### REFERENCES

Albin, M., Grossman, P. D. and Moring, S. E., 1993, Sensitivity enhancement for Capillary Electrophoresis, Analytical Chemistry 65, 489 A-497 A.
Bruin, G. J. M., Tock, P. P. H., Kraak, J. C. and Poppe, H., 1990, Electrically driven open-tubular liquid chromatography, Journal of Chromatography 517, 557-572.
Dittmann, M. M., Wienand, K., Bek, Fritz and Rozing, G. P., 1995, Theory and practice of Capillary Electrochromatography, LC-GC 13, 800-814.
Doshi, M. R., Daiya, P M. and Gill, W. N., 1978, Three Dimensional Laminar Dispersion in Open and Closed Rectangular Conduits, Chemical Engineering Science 33, 795-804.
Fifield and Kealy, 1990, Principles and Practice of Analytical Chemistry, Blackie, London
Giddings, J. C., 1966, Separation Science 1, 123. Giddings, J. C., Yang, F. J. F. and Myers, M. N., 1976, Flow Field_Flow Fractionation: a versatile new separation method, Science 193, 1244-1245.
Giddings, J. C., Chang, J. P., Myers, M. N., Davis, J. M. and Caldwell, K. D., 1983, Journal of Chromatography 255, 359.
Golay, M. J. E., 1981, The height equivalent to a theoretical plate of retentionless rectangular tubes, Journal of Chromatography 216, 1-8.
Guiochon, G., 1981, Conventional Packed Columns vs. Packed or Open Tubular Microcolumns in Liquid Chromatography, Analytical Chemistry 53, 1318-1325.
Gohlin, K., Bushke, A. and Larsson, M., 1994, Kinetic Performance of Open-Tubular and packed Columns in LC Using the Same Stationary Phase, Chromatographia 39, 729-739.
Katz, E. D., Ogan, K. and Scott, R. P. W., 1985, Chromatography column design, in Journal of Chromato graphy Library 32, 403-447, Elsevier, Amsterdam.
Manz, A., 1997, European A2 patent 0670 489 Martin, M., Jurado-Baizaval, J.-L. and Guiochon, G., 198-2a, Chromatographie en phase liquide dans des canaux a section rectangulaire, Comptes Rendus de l' Academie de Sciences Paris II 295, 579-581.
Martin, M., Jurado-Baizaval, J.-L. and Guiochon, G., 198-2b, Gas Chromatography in Open Rectangular Channels with Large Aspect Ratios, Chromatographia 16, 98-102.
Peaden, P. A. and Lee, M. L., 1983, Theoretical treatment of reolving power in open tubular column supercritical fluid chromatography, Journal of Chromatography 259, 1-16.
Poppe, H., 1992, Fundamentals and applications of chromatography and related differential migration methods, part A: fundamentals and techniques, in Journal of Chromatography Library 51A, A 152-A 221, Elsevier, Amsterdam.
Schisla, D. K., Ding, H., Carr, P. W. and Cussler, E. L., 1993, Polydisperse Tube Diameters Compromising Multiple Open Tubular Chromatography, American Institute of Chemical Engineers Journal 39, 946-953.
Tock, P. P. H., Duijsters, P. P. E., Kraak, J. C. and Poppe, H., 1990, Theoretical optimization of open-tubular columns for liquid chromatography with respect to mass loadability, Journal of Chromatography 506, 185-200.
Tsuda, T., Sweedler, J. V. and Zare, R. N., 1990, Rectangular capillaries for Capillary Zone Electrophoresis, Analytical Chemistry 62, 2149-2152.
Xi, X. and Yeung, E. S., 1990, Axial Beam On-column Absorption Detection for Open Tubular Capillary Liquid Chromatography, Analytical Chemistry 62, 1580-1585.

## Claims

1. Method for separating a fluid substance into its components, in particular a chromatographic separating method, by driving a mobile phase in, out and through a finite separating path, said path being defined by at least two wall elements, and in said path a retentive phase is arranged and through which a mobile phase and an injected sample to be separated into its components flow, **characterized in that** the driving in, out and through the separating path of the mobile phase is mainly caused by shear forces, which forces originate from a relative movement of at least one wall element compared to the other wall element.

2. Method according to claim 1, **characterized in that** the driving of the mobile phase is partly caused by an additional force, in particular a pressure, an electric field, a capillary, a gravitational or a centrifugal force.

3. Method according to claim 1 or 2, **characterized in that**, the retentive phase and the mobile phase are moved preferentially both with respect to a detection point in the separating path in a mutual opposite axial direction.

4. Method according to claim 3, wherein the velocity of the motion of the two wall elements is chosen, such that a continuous separation can be effected.

5. Separating device for separating a fluid substance into its components, in particular a chromatografic separation device, said device comprises a finite separating path in which a retentive phase is arranged and through which a mobile phase and an injected sample to be separated into its components flow, and means for transporting the mobile phase in, through and out the separation path, **characterized in that** the means for transporting the mobile phase are formed by at least one wall element, said element is slidably arranged parallel to separation path.

6. Device according to claim 5, wherein at least a part of the slidably arranged wall element is arranged out the separation path.

7. Device according claim 5 or 6, **characterized in that** two slidably arranged wall elements are provided, said elements are movably in the separating path in a mutual opposite axial direction.

8. Device according to one of the claims 5-7, **characterized in that** guiding means are provided for determining the parallel position of the slidable aranged wall element in the separation path and sealing means for sealing of the detection path.

9. Device according to one of the claims 5-8, **characterized in that** the slidably arranged wall element is a moving transport belt.

10. Device according to one of the claims 5-9, **characterized in that** means for cleaning the slidably arranged wall element are provided.

11. Device according to one of the claims 5-10, **characterized in that** the separation path is a planar straight or circular channel.
